# EUROPEAN PATENT SPECIFICATION

(11) **EP 1 192 342 B1**
(45) Date of publication and mention of the grant of the patent: **12.10.2005**
(21) Application number: 00944512.3
(22) Date of filing: 13.06.2000
(51) Int. Cl.: F02D 9/02, F02D 41/18, F02D 43/00

(54) **METHOD FOR CONTROLLING A COMBUSTION ENGINE, AND ARRANGEMENT FOR SUCH A METHOD**
VERFAHREN ZUM REGELN EINER BRENNKRAFTMASCHINE UND EINRICHTUNG FÜR EIN SOLCHES VERFAHREN
PROCEDE DE CONTROLE D'UN MOTEUR A COMBUSTION ET DISPOSITIF POUR REALISER LEDIT CONTROLE

(30) Priority: 05.07.1999 SE 9902567
(43) Date of publication of application: 03.04.2002
(73) Proprietor: Volvo Personvagnar AB, 405 31 Göteborg (SE)
(72) Inventor: LITORELL, Martin, S-414 59 Göteborg (SE); LINDSTRÖM, Johan, S-148 91 Ösmo (SE); NOREN, Bengt, S-431 39 Mölndal (SE)
(74) Representative: Andersson, Per Rune
(86) International application number: PCT/SE2000/001224
(87) International publication number: WO 2001/002708

(56) References cited:
- EP-A2- 0 964 143
- US-A- 4 184 461
- US-A- 4 376 427
- US-A- 4 535 736
- US-A- 5 040 506
- US-A- 5 209 207
- US-A- 5 544 634
- US-A- 5 606 951
- US-A- 5 660 157

## Description

### TECHNICAL FIELD

The present invention relates to a method for control of a combustion engine, according to the preamble of appended claim 1. The invention is particularly intended for use during control of a combustion engine of the direct-injected Otto cycle engine type between two modes of operation which are characterized by different air/fuel mixtures to the engine, preferably a first mode for stratified operation and a second mode for homogeneous operation. The invention also relates to an arrangement for such a control, according to the preamble of appended claim 7.

### BACKGROUND OF THE INVENTION

In the field of vehicles which are operated by combustion engines, there is a general demand for low emissions of harmful substances in the exhaust gases from the engine. Said substances are primarily constituted by pollutants in the form of nitric oxide compounds (NOₓ), hydrocarbon compounds (HC), and carbon monoxide (CO). As regards today's petrol engines, the exhaust gases are normally purified by means of an exhaust catalyst which forms part of the exhaust system and through which the exhaust gases are guided. In a so-called three-way catalyst, which is previously known, the major part of the above-mentioned harmful compounds is eliminated by means of known catalytic reactions. In order to optimize the function of the catalyst so that it provides an optimal degree of purification for NOₓ, HC, and CO, the engine is in most operating cases operated by a stoichiometric air/fuel mixture, i.e. a mixture where λ=1.

Furthermore, in the field of vehicles, there is a general demand for reducing the fuel consumption of the engine to the highest possible degree. To this end, during the last few years, engines have been developed having new types of combustion chambers in the engine's cylinders, particularly in order for the engine to be able to be operated by increasingly lean fuel mixtures, i.e. where λ=1. In a so-called DI engine (i.e. a direct-injected Otto cycle engine), the respective combustion chamber in the engine is constructed in such manner that the supplied fuel can be concentrated to a high degree at the respective ignition plug. This mode of operation is generally termed "stratified" operation and during continuous driving at a low or a medium-high torque and engine speed of the engine, it provides an operation with a very lean air/fuel mixture, more precisely up to approximately λ=3. In this manner, a substantial saving in the fuel consumption is obtained in this type of engine. The engine can also be operated in an additional, "homogeneous" mode of operation, with an essentially stoichiometric mixture (λ=1) or a comparatively rich mixture (λ<1). This later mode of operation normally prevails during driving situations with comparatively high torques and engine speeds of the engine.

During stratified operation, a lean exhaust gas mixture will flow through the three-way catalyst. This results in that the three-way catalyst can not be utilized for reducing the NOₓ compounds in the exhaust gases (due to the fact that it is constructed for an optimal degree of purification for a stoichiometric mixture). For this reason, a conventional three-way catalyst can be combined with a nitric oxide adsorbent (also called NOₓ adsorbent, or "NOₓ trap"), which is a per se known device for absorption of NOₓ compounds, e.g. in the exhaust gases from a combustion engine. In this manner, the NOₓ adsorbent can be utilized as a complement to a conventional three-way catalyst, either as a separate unit upstream of the three-way catalyst or as an integral part of the three-way catalyst, i.e. together with the catalytic material of the three-way catalyst. In the latter case, an integrated component in the form of a NOₓ adsorbing exhaust catalyst is formed.

The NOₓ adsorbent is constructed in such manner that it takes up (adsorbs) NOₓ compounds in the exhaust gases if the engine is operated by a lean air/fuel mixture and gives off (desorbs) the NOₓ compounds if the engine is operated by a rich air/fuel mixture during a certain time period. Furthermore, the NOₓ adsorbent has the property of being able only to adsorb NOₓ compounds up to a certain limit, i.e. it is eventually "filled" and thus reaches a limit for the adsorption. In this situation, the NOₓ adsorbent must be regenerated, i.e. it must be influenced to desorb and thus to release the accumulated NOₓ compounds. If a conventional three-way catalyst in this case is arranged downstream of a NOₓ adsorbent, or if alternatively a three-way catalyst is formed as an integral part of a NOₓ adsorbent, the desorbed NOₓ compounds can be eliminated by means of the three-way catalyst, provided that the latter has reached its ignition temperature.

According to the prior art, a NOₓ adsorbent can be regenerated by means of the fact that the exhaust gas mixture which flows through the NOₓ adsorbent is made comparatively rich during a certain time period, approximately a few seconds. In practice, this is achieved by operating the engine during this time period in the above-mentioned homogeneous mode of operation, wherein the engine thus is operated by a comparatively rich air/fuel mixture. In this manner, the NOₓ adsorbent is "emptied" so that it subsequently can adsorb NOₓ compounds during a certain time period which lasts until a new regeneration becomes necessary.

As regarding previously known engine systems, a switch between stratified and homogeneous mode can occur by means of an adjustment of the air/fuel mixture which is supplied to the engine and the progress in time for the injection of said mixture. This switch is normally initiated as a result of the engine's driver requesting a changed torque from the engine. This is provided by means of a detection of the position of the engine's accelerator pedal. The vehicle comprises a computer based control unit which, depending on the required torque, secures that a suitable air/fuel mixture is fed to the engine depending on whether a stratified or a homogeneous operation prevails and depending on, for example, the prevailing torque and engine speed of the engine.

Apart from a driver-initiated switch from, for example, stratified to homogeneous operation, the engine also must be switched to the homogeneous mode of operation in a compulsory manner (i.e. independent of whether the prevailing driving situation corresponds to homogeneous operation or not) when the control unit has estimated that a regeneration of the NOₓ adsorbent is necessary. This requirement usually occurs after a certain time period has passed from a previous regeneration or after a certain amount of NOₓ compounds has been fed into the NOₓ adsorbent, e.g. when the NOₓ adsorbent is full.

According to prior art, a control unit is in this manner utilized with a suitable strategy for switching the combustion engine between homogeneous and stratified operation depending on the degree of throttle application and the engine speed of the engine, and with regard to whether a NOₓ regeneration is necessary.

EP-A- 964 143 (a prior at according to Art 54(3) EPC) discloses a switch between stratified combustion and homogenous mode, and vice versa, each with a homogenous and a stratified injection timing, caused by ceratin operating condition and at a specific lambda value A/F-s or A/F-hl , so that the torque is kept essentially constant and by adjusting the air and fuel amount accordingly

In connection with previously known systems for switching a DI engine between stratified and homogeneous operation, a problem prevails due to the fact that this mode switch essentially can occur when the engine is operated by an air/fuel mixture, the composition of which is disadvantageous for the prevailing operating case. This is a result of the fact that each operating case of the engine requires a certain optimized air/fuel mixture. For example, a switch to a too rich, stratified mode of operation results in an undesired carbon deposit in the engine. Furthermore, a mode switch to a too lean, homogeneous mode of operation results in an unstable combustion, which in turn can result in loss of torque or misfire of the engine.

The problem as regarding disadvantageous air/fuel mixtures (i.e. disadvantageous lambda values) in the respective operating case may per se be solved by means of a correction of the fuel amounts to the engine, by means of which a suitable lambda value in this manner is achieved. However, such a procedure results in a drawback in so far as the torque of the engine is influenced in some direction. Of course, this constitutes a drawback as regards the comfort, since it is perceived as a "jerk" for the passengers of the vehicle.

### SUMMARY OF THE INVENTION:

The object of the present invention is to provide an improved method for control of a combustion engine. In particular, the object of the invention is to provide an optimized switch between two modes of operation in a DI engine, preferably homogeneous and stratified operation. Said object is accomplished by means of a method, the characterizing features of which will be apparent from appended claim 1. Said object is also accomplished by means of an arrangement, the characterizing features of which will be apparent from appended claim (7).

By means of the invention, several advantages are accomplished. Primarily, it can be established that the occasion of the switch between the various modes of operation according to the invention is selected with such accuracy that there is no need to correct the fuel amounts in order to achieve an advantageous lambda value. According to the invention, the switch between various modes of operation is instead adjusted so that a stable combustion in the engine is maintained during the entire switch between prevailing modes of operation. Furthermore, by means of the invention, a switch between the various modes of operation is achieved without any noticeable torque changes in the engine, which constitutes an advantage as regards the comfort for the passengers of the vehicle. Also, to some extent, the emissions of the engine can be reduced.

The invention is based on the fact that the values regarding the lambda figures which correspond to a required air/fuel mixture to the engine are calculated continuously for any of the possible modes of operation and for the requested mode of operation for the engine before as well as after a switch.

In this connection, the term "NOₓ adsorbing exhaust catalyst", which is used hereinafter, refers to an integrated component which comprises NOₓ adsorbing material as well as material which provides the function of a conventional three-way catalyst.

In this connection, the term "mode of operation", refers to operation of a combustion engine of the DI engine type according to a predetermined progress in time for injection of fuel and ignition of an air/fuel mixture. As an example of a mode of operation of a DI engine can be mentioned stratified and homogeneous mode of operation.

In this connection, the term "fuel control", is utilized in order to define either a nominal fuel control, which corresponds to the fact that air and fuel into the engine are dosed in accordance with predetermined amounts during the prevailing driving condition (e.g. depending on the engine speed of the engine and its required torque), or an air-based fuel control, wherein air into the engine is dosed in accordance with a predetermined amount during the prevailing driving condition (e.g. depending on the engine speed of the engine and its requested torque) and fuel into the engine is dosed in accordance with the prevailing amount of inflowing air.

Advantageous embodiments of the invention will be apparent from the appended dependent claims.

### BRIEF DESCRIPTION OF THE DRAWINGS

The invention will be further described in the following with reference to a preferred embodiment and to the annexed drawings, in which
- Fig. 1: is a principal diagram of an arrangement in which the present invention can be utilized, and
- Fig. 2: is a slightly simplified flow chart which describes the function of the invention.

### PREFERRED EMBODIMENTS

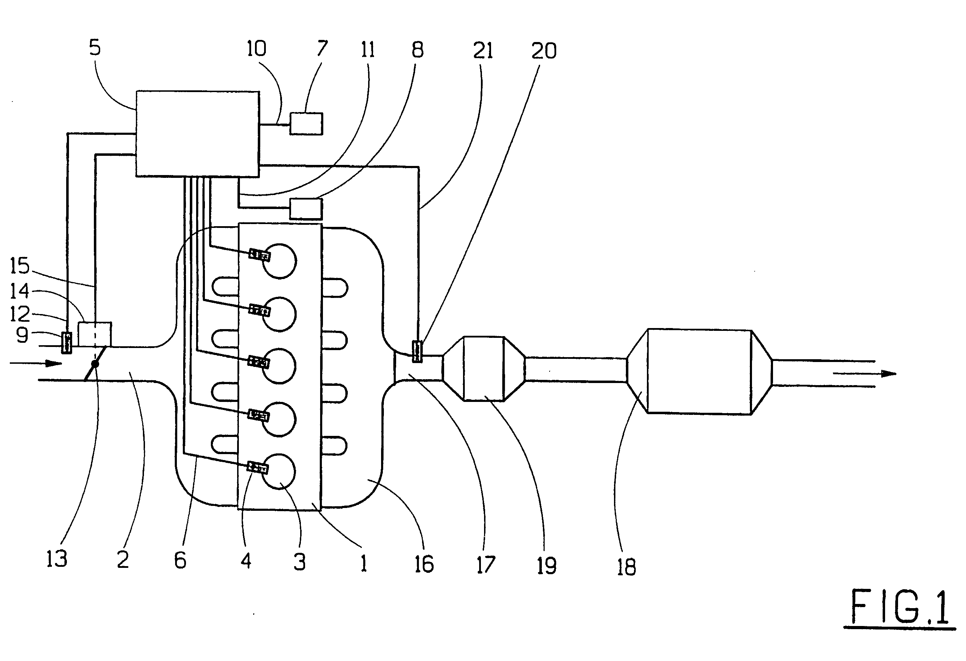

Fig. 1 shows a schematic view of an arrangement according to the present invention. According to a preferred embodiment, the invention is arranged in connection with a combustion engine 1 which is constituted by a so-called DI engine, i.e. an engine of the direct-injected Otto cycle engine type, where the injection of fuel to the engine 1 is adapted for at least two modes of operation with different air and fuel supply to the engine 1 and a varying progress in time for injection of fuel and for the ignition of the air/fuel mixture. In accordance with what will described in detail below, the engine 1 is preferably adapted to be able to be set in a "stratified" mode of operation, wherein the supplied fuel is concentrated in the respective combustion chamber of the engine so that the engine during certain predetermined operating cases can be operated by a very lean air/fuel mixture, approximately λ=3. The stratified mode of operation is based on the fact that fuel is injected into the engine 1 so that it is mixed partially (i.e. non-homogeneously) with air, wherein a small "cloud" of mixed fuel and air is formed. Around this partial mixture there is essentially clean air. In this manner, ignition of a very lean mixture, approximately λ=3, can occur. Compared with the case where λ=1, three times as much air is in this case supplied with the same amount of fuel. By means of such an engine, considerable fuel savings are provided compared with engines which are operated by a stoichiometric mixture, i.e. where λ=1. Furthermore, the engine 1 preferably can be set in a "homogeneous" mode of operation during certain operating cases at comparatively high torques and engine speeds of the engine 1, wherein a stoichiometric or a comparatively rich mixture is supplied to the engine 1. In this case, this mixture - in contrast to what is the case during the stratified mode of operation - is essentially uniformly distributed in the combustion chamber.

In the following, an embodiment of the invention will be described, wherein the engine 1 is assumed to be operated either in a stratified or a homogeneous manner. However, the invention is not limited to merely these two modes of operation. For example, the engine 1 can be operated in a homogeneous, lean mode of operation, which is based on the homogeneous mode of operation which is described above (wherein λ=1), but where the air/fuel mixture is comparatively lean, approximately 1,2-1,3. This is made possible by means of the fact that the ignition angle for the ignition of the air/fuel mixture is brought forward. The reason for this is that a comparatively lean, homogeneous mixture is combusted slower than a homogeneous mixture with λ=1.

The engine 1 is in a conventional manner supplied with inflowing air via an air inlet 2. Furthermore, the engine 1 is provided with a number of cylinders 3 and a corresponding number of fuel injectors 4. The respective injector 4 is connected to a central control unit 5 via an electrical connection 6. Preferably, the control unit 5 is computer based and is adapted to control the fuel supply to each injector 4 with fuel from a fuel tank (not shown) in a known manner so that a constantly adapted air/fuel mixture is fed to the engine 1. The engine 1 according to the embodiment is formed in accordance with the "multi-point" injection type, where the correct amount of fuel to the engine 1 can be supplied individually to the respective injector 4 in a known manner.

During operation of the engine 1, the control unit 5 is adapted in a general manner to control the air/fuel mixture to the engine 1 so that it in every given moment is adapted to the prevailing mode of operation. The control of the engine 1 takes place in an essentially known manner depending on various parameters which reflect the mode of operation of the engine 1 and the vehicle in question. For example, the control of the engine can take place depending on the prevailing degree of throttle application, the engine speed, the amount of injected air to the engine and the oxygen concentration in the exhaust gases. To this end, the engine 1 is provided with, for example, a position indicator 7 for the vehicle's accelerator pedal (not shown), an engine speed indicator 8 for detection of the engine speed of the engine 1 and an air flow meter 9 for detection of the amount of supplied air to the engine 1, all of which are connected to the control unit 5 via corresponding electrical connections 10, 11 and 12, respectively. Furthermore, the system comprises a gas throttle 13, which preferably is electrically controllable and, for this reason, is provided with a controllable shifting motor 14, by means of which the gas throttle 13 can be set in a certain desired position so that a suitable amount of air is fed into the engine 1 depending on the prevailing mode of operation. Thus, the shifting motor 14 is connected to the control unit 5 via an additional connection 15.

To sum up, the engine 1 according to the invention is adapted to be able to assume several different modes of operation, each of which is characterized by specific air/fuel mixtures, injections times and ignition times. In this case, the control unit 5 is adapted to change between the various modes of operation depending on, for example, the driving situation, the load and the engine speed.

The engine 1 that is shown in the drawing is of a five-cylinder type. However, it shall be noted that the invention can be utilized in engines having various numbers of cylinders and various cylinder configurations. Preferably, the injectors 4 are constituted by the type in which the fuel is injected directly into the respective cylinder 3.

During operation of the engine 1, its exhaust gases are guided out from the cylinders 3 via a branch pipe 16 and further on to an exhaust pipe 17 which is connected to the branch pipe 16. Preferably, a NOₓ adsorbing exhaust catalyst 18 is provided further downstream along the exhaust pipe 17, which exhaust catalyst in turn is constructed of a three-way catalyst that is integrally formed with a NOₓ adsorbent. The exhaust catalyst is of a per se known type and is adapted to adsorb NOₓ compounds which flow out from the engine 1 via the exhaust pipe 8. The exhaust catalyst 18 is constituted by an integrated unit which on the one hand comprises NOₓ adsorbing material and on the other hand comprises a precious metal which provides the function of a per se conventional three-way catalyst. In the following, the term "NOₓ adsorbing exhaust catalyst", alternatively (shortened) "exhaust catalyst", will be utilized in order to describe such an integrated component. Alternatively, the invention can comprise a NOₓ adsorbent which is arranged as a separate component in connection with a three-way catalyst. Independently of the form which is selected, the NOₓ adsorbent 18 is schematically indicated in the drawing as a single unit.

Furthermore, according to the embodiment, the engine 1 is connected to a pre-catalyst 19 which is arranged upstream of the exhaust catalyst 18. The pre-catalyst 19 is particularly adapted for rapid heating during cold starts of the engine 1, i.e. so that its catalytic coating becomes active rapidly. This provides a considerable elimination of HC, CO, and NOₓ compounds in the exhaust gases, particularly during low idle flows. Also, due to the fact that the flowing exhaust gases can be heated rapidly by means of the pre-catalyst 19, a comparatively short ignition time is provided for the subsequent exhaust catalyst 18, i.e. a comparatively short time that passes until the exhaust catalyst 18 has been heated to a temperature at which it is capable of reducing a predetermined part of the harmful substances in the exhaust gases. This results in a more effective exhaust purification for the engine 1. This improvement is particularly useful during cold starts.

Thus, the exhaust gases from the engine 1 flow through the exhaust pipe 17, through the pre-catalyst 19 and the exhaust catalyst 18 and then further out into the atmosphere. During homogeneous operation of the engine 1, i.e. during essentially stoichiometric driving conditions (i.e. λ=1), the exhaust catalyst 18 functions as a conventional three-way catalyst, i.e. for elimination of hydrocarbons (HC), carbon monoxide (CO) and nitric oxide compounds (NOₓ). During lean modes of operation (i.e. λ>1) within a certain temperature window, more precisely approximately 250-450° C, the major part of the NOₓ compounds which are emitted from the engine 1 is adsorbed by means of the NOₓ adsorbing material in the exhaust catalyst 18.

Furthermore, the arrangement according to the invention comprises a sensor 20 for detection of the oxygen concentration in the exhaust gases. Preferably, the sensor 20 is of the linear lambda probe type (but may alternatively be constituted by a binary probe) and is connected to the control unit 5 via an electrical connection 21. Preferably, the sensor 20 is provided in the exhaust pipe 17, upstream of the pre-catalyst 19. However, other locations are possible, for example between the pre-catalyst 19 and the exhaust catalyst 18. In a manner which is per se previously known, the sensor 20 is utilized for generation of a signal which corresponds to the oxygen concentration in the exhaust gases. Said signal is fed to the control unit 5 via the connection 21 and is utilized for control of the air/fuel mixture to the engine 1.

The function of the invention will now be described in detail. There is a general demand for securing that the engine 1 provides a desired torque as quickly as possible, while the emissions from the engine 1 are minimized. During a comparatively low torque and low engine speeds, the engine 1 is adapted to be driven in a stratified operation, with a very lean air/fuel mixture. During a comparatively high torque and high engine speeds, the engine 1 is also adapted to be driven in a homogeneous mode of operation, i.e. with a stoichiometric or essentially stoichiometric mixture. According to what has been mentioned above, the invention is not limited to these two modes of operation, but may also, for example, be operated in a lean, homogeneous or a rich, homogeneous manner etc. The choice of mode of operation takes place in accordance with tables which have been fixed in advance and which are stored in a memory unit in the control unit 5. On the basis of the prevailing engine speed of the engine 1, which is fixed by means of the engine speed indicator 8, and the required torque for the engine 1, which can be read by means of the level indicator 7 for the position of the accelerator pedal, the control unit 5 can determine whether the engine 1 shall be positioned in, for example, the stratified or the homogeneous mode of operation.

For adjustment of the required mode of operation, a prevailing value of, for example, the prevailing inflowing amount of air into the engine may alternatively be utilized.

The switch between stratified and homogeneous operation can also be made compulsory as a consequence of a demand for regeneration of the exhaust catalyst 18. This can be made in the following manner. When the engine 1 is operated in a stratified manner, i.e. with a lean air/fuel mixture, the exhaust gas mixture which flows through the exhaust pipe 17 and reaches the exhaust catalyst 18 is also lean. According to known principles, the major part of the NOₓ compounds which are present in the exhaust gas mixture will be adsorbed by the exhaust catalyst 18. After driving with a lean exhaust gas mixture for a certain amount of time, normally approximately 1-2 minutes, the exhaust catalyst 18 will be "full", which means that the exhaust catalyst 18 is unable to absorb NOₓ compounds from the exhaust gas mixture to the same extent as previously. At this stage, the exhaust catalyst 18 must be regenerated. According to what has been described above, the demand for regeneration can be determined by means of the control unit 5, which in this case sets the engine 1 in the homogeneous mode of operation. This makes it possible to make the exhaust gas mixture through the exhaust catalyst 18 comparatively rich during a certain time period, e.g. during a few seconds. In this manner, NOₓ compounds which previously have been adsorbed in the exhaust catalyst 18 are desorbed, so that this once again is allowed to adsorb NOₓ compounds during a certain time period which lasts until it becomes necessary with a new regeneration. When the NOₓ compounds have been desorbed from the exhaust catalyst 18, they will also be reduced by means of the catalytic coating which constitutes an integrated part of the exhaust catalyst 18.

The adsorbed NOₓ compounds can be reduced directly without an intervening desorption if the exhaust catalyst is of the type which is constructed as an integrated three-way catalyst and a NOₓ adsorbent.

The times at which it is suitable to make the regeneration can be calculated by means of the control unit 5, and is determined depending on, among other things, the exhaust catalyst 18 and its storage capacity for NOₓ compounds and its degree of transformation. Said storage capacity of the exhaust catalyst 18 is also affected by a possible ageing and deactivation depending on sulphur compounds. When an excessive amount of sulphur has accumulated in the exhaust catalyst 18, sulphur regeneration must be carried out. This can be made according to prior art and will not be described in detail here.

The control unit 5 is adapted for suitable fuel control of the engine 1, i.e. for adjustment of an air/fuel mixture which is adapted in a suitable manner in accordance with the prevailing mode of operation at a given driving situation. More precisely, the control unit is adapted either for a so-called nominal fuel control, wherein set values regarding the amount of air and fuel to the engine are determined in accordance with predetermined amounts at a given driving situation (e.g. depending on the engine speed of the engine and its required torque), or a so-called air-based fuel control, wherein air into the engine is dosed in accordance with a predetermined amount at the prevailing driving situation (e.g. depending on the engine speed of the engine and its required torque) and fuel to the engine is dosed in accordance with the prevailing amount of air.

The invention is based on the fact that the fuel amount to the engine can be changed momentarily, whereas the amount of air to the engine has a great inertia during possible changes. During lean driving situations (e.g. stratified operation), the torque out from the engine only depends on the amount of injected fuel. Small changes of the amount of air do not affect the torque since there is an excess of air. For this reason, a nominal fuel amount is then utilized. However, during stoichiometric, homogeneous operation (i.e. λ=1) of the engine, exact proportions between fuel and air are required in order to minimize the emissions. In order to accomplish this, a certain amount of air is directed out for a given set value. However, it takes a certain time before this amount of air arrives. Therefore, in order to minimize the emissions from the engine, an air-based fuel control is utilized, wherein it is secured that the amount of air in a subsequent piston stroke is estimated on the basis of the pressure in the induction pipe and the measured amount of air before the gas throttle 13. Next, by means of the control unit 5 it is secured that the exact amount of fuel (which corresponds to said amount of air) is injected into the respective cylinder 3.

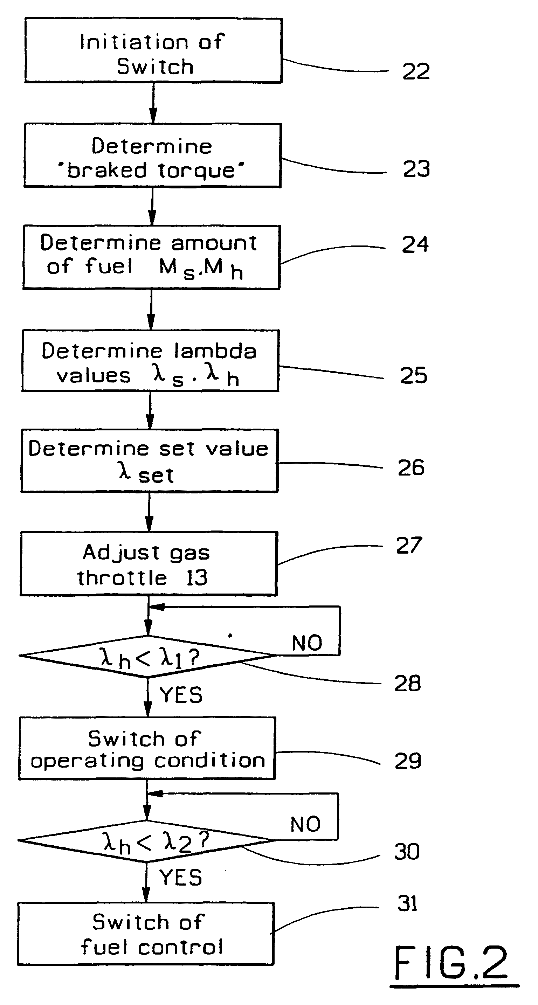

Fig. 2 shows a simplified flow chart which describes the function of the invention in connection with a switch from the stratified to the homogeneous mode of operation. Thus, in the initial position, it is assumed that the engine 1 is operated in the stratified mode of operation, which corresponds to a comparatively low torque and a comparatively low engine speed of the engine 1. According to what has been described above, the engine 1 generates a lean exhaust gas mixture in this condition.

According to the invention, both an optimized occasion for mode switch, i.e. in the prevailing case a switch of the progress of injection and the fuel supply from stratified to homogeneous, and an optimized occasion for switch between nominal and air-based fuel control is initiated.

If the driver during driving requests an increased driving torque from the engine which requires a switch from stratified to homogeneous mode of operation, this normally corresponds to that the position of the accelerator pedal is changed. This is detected by means of the above-mentioned position indicator 7. This results in that the control unit 5 calculates the required, so-called "braked" torque (square 23) of the engine 1, i.e. the resulting, output torque of the engine 1.

Next, the calculated value of the required braked torque is compensated in the control unit 5 with regard to the prevailing estimated pump and friction losses in the engine 1. Said losses can be estimated on the basis of the temperature of the cooling water of the engine 1, which in turn can be determined by means of a (not shown) temperature indicator for the cooling water. Thus, in this manner, a compensated torque (or "indicated" torque) is provided on the basis of the braked torque. Next, on the basis of the compensated torque, the control unit 5 determines a nominal amount of fuel Mₛ and Mₕ, respectively, for the stratified and the homogeneous mode of operation, respectively (square 24). This is determined by means of tables which are stored in advance in the control unit 5 and which indicate a connection between the compensated torque and said fuel amounts Mₛ, Mₕ for each mode of operation.

By means of values regarding the nominal fuel amounts Mₛ, Mₕ and a value regarding the prevailing amount of inflowing air to the engine 1, which is determined by means of the air flow meter 9, lambda values λₛ and λₕ, respectively, for the stratified and the homogeneous mode of operation, respectively, can be determined (square 25). According to the invention, both of these lambda values λₛ, λₕ (and also, should the occasion arise, lambda values which correspond to all other possible modes of operation of the engine) are calculated simultaneously. Thus, this determination of the two lambda values λₛ, λₕ takes place continuously before and after each mode switch of the engine 1.

The next step is the determination of a set value λₛₑₜ regarding the air/fuel mixture which shall prevail in the requested mode of operation, i.e. in the prevailing case in the homogeneous operation (square 26). To this end, the control unit 5 is provided with tables which indicate a suitable set value λₛₑₜ for each driving situation and mode of operation. As an example, it can be mentioned that this set value λₛₑₜ in a homogeneous mode of operation is approximately 1. In a stratified mode of operation, the set value is approximately 1, 5-3, depending on the driving situation.

Depending on the prevailing, calculated set value λₛₑₜ (which thus shall prevail after the switch to the homogeneous mode of operation) and the prevailing nominal fuel amount in the requested operating situation (i.e. the homogeneous fuel amount Mₕ according to what has been described above), the above-mentioned gas throttle 13 (cf. Fig. 1) is also activated for adjustment of a homogeneous amount of air (square 27). Due to the fact that a mode switch now has been requested, the gas throttle 13 will start to readjust.

Due to a certain inertia regarding the adjustment of the required amount of air, it takes a certain time (approximately a tenth of a second) until the set value λₛₑₜ is reached. This results in that the prevailing lambda value λₕ will change gradually. In practice, during a switch from a stratified to a homogeneous mode of operation, the lambda value λₕ will then gradually drop from a value of approximately 2-3 to the selected set value λₛₑₜ, which, according to what has been mentioned above, is approximately 1 during a switch to the homogeneous mode of operation.

The invention is based on the fact that it is impossible to change the amount of air in to the engine momentarily, but that it takes a certain time to change the amount of air to the homogeneous amount of air in order to reach the determined set value λₛₑₜ. For this reason, the mode switch can not be initiated until the amount of air has been changed to such extent that a correct operation of the engine is allowed in both the prevailing modes of operation during a certain short time period.

According to what has been mentioned above, there is, in connection with prior art, a risk of the engine being operated at a disadvantageous lambda value or that the fuel amount must be corrected temporarily so that a suitable lambda figure is reached, which in turn results in that the torque is affected. In accordance with the invention, said drawbacks can be avoided. In order to accomplish this, a mode switch can not occur until a certain limit condition has been fulfilled. This limit condition can be expressed either as a maximum lambda value that is allowed to prevail in the homogeneous mode of operation or as a minimum lambda value that is allowed to prevail in the stratified mode of operation. Due to the fact that it can be assumed that the consequences will be more grave if the engine is operated too lean in a homogeneous mode of operation than if it is operated too rich in a stratified mode of operation, the invention is based on the fact that the mode switch is not allowed until the limit regarding normal operation in homogeneous, i.e. λ=1, has been fulfilled. However, the invention is not limited to this variant, but other strategies for selection of limit conditions are possible as long as a satisfactory operation of the engine through the whole mode switch can be accomplished.

Concurrently with the fact that the inflowing amount of air gradually reaches its new level, the prevailing lambda value also turns inwards to the set value λₛₑₜ, which is due to the fact that the fuel amount is predetermined according to the prevailing, nominal fuel control.

Thus, the control unit 5 is adapted to detect whether the prevailing lambda value λₕ for the homogeneous mode of operation has been changed to such extent that it is lower than a predetermined limit value, i.e. if λₕ<λ₁, wherein this limit value λ₁ preferably is approximately 1, 2. If this is the case (square 28), this will result in that a switch to a homogeneous mode of operation (square 29) occurs. Thus, this implies that the progress in time for supply of fuel and air to the engine 1 and the progress in time for ignition of air/fuel mixture changes from stratified to homogeneous type.

The above-mentioned limit value λ₁ is predetermined and preferably approximately 1,2. More precisely, this limit value is selected as the highest value where a stable combustion in the engine 1 is provided during the mode switch. The fact is, that if a switch from stratified to homogeneous mode of operation occurs at a too low limit value, an undesired carbon deposit from the engine 1 will occur. If, according to what has been described above, the switch instead occurs at too high limit value (i.e. a too lean homogeneous mode of operation), an unstable combustion occurs, which can result in torque loss or misfire of the engine.

Finally, during a continued change of the position of the gas throttle 13, with the intention of reaching the above-mentioned set value λₛₑₜ, the prevailing lambda value will have decreased to such extent that it is lower than a second, predetermined limit value, i.e. λₕ<λ₂ (square 30). When this happens, the type of fuel control changes (square 31) and follows the per se known air-based type of injection at which the required amount of fuel for the respective moment of operation of the engine 1 is calculated depending on the prevailing air flow to the engine 1. The last-mentioned limit value λ₂ is selected sufficiently low so that it do not result in a too high addition of torque, which is a drawback as regards the comfort, since it is perceived as a jerk for the passengers of the vehicle.

During the selection of the two limit values λ₁, λ₂, the following is taken into consideration. If the mode switch occurs at a too high lambda value λₕ, an unstable combustion will occur, which can result in torque loss or misfire. If the switch of fuel control occurs at a too high lambda value λₕ, a torque change in the form of an undesired addition of torque will occur, which is a drawback as regards the comfort, since it is perceived as a jerk for the passengers of the vehicle. Thus, according to the invention, the switches occur at limit values which are adjusted in order to avoid said drawbacks.

By means of the invention, an essential advantage is provided in the form of a stable combustion in the engine during the mode switch. Also, an improved comfort is provided for the passengers in the vehicle in question. More precisely, by means of the invention, switches between the stratified and the homogeneous mode of operation (and any additional modes of operation which possibly will occur) are provided which are smooth and without jerks.

According to the invention, essentially the same principles which have been described above are utilized during a switch from, for example, homogeneous to stratified mode of operation as during the above-mentioned switch from stratified to homogeneous mode of operation. One difference, however, is that a switch of fuel control (i.e. from air-based to nominal fuel control) occurs immediately after a switch to stratified mode of operation has been requested. When the lambda value then exceeds a predetermined limit value which corresponds to a stable combustion and a switch which is without jerks, the engine will be switched to the stratified mode of operation.

The invention is not limited to the embodiments which are described above and shown in the drawings, but may be varied within the scope of the appended claims. For example, the invention can be utilized without a pre-catalyst 19. Furthermore, the invention can be utilized in those cases where a NOₓ adsorbent and a conventional three-way catalyst are arranged as two separate components, instead of the above-mentioned embodiment where said two components have been integrated into one single component in the form of a NOₓ adsorbing exhaust catalyst. In principle, the invention also can be utilized in connection with engines which do not comprise a NOₓ adsorbent.

According to what has been described above, the fuel control changes abruptly when the lambda values are sufficiently close to each other. However, the invention can also be utilized in connections which comprise a gradual transition from, for example, a nominal to an air-based fuel control, e.g. based on the prevailing lambda value.

## Claims

1. Method for control of a combustion engine (1) of the DI engine type, which method comprises:
generation of an air/fuel mixture to the respective cylinders (3) of the engine (1), and
switch between at least a first mode of operation and a second mode of operation of the engine (1), which are constituted by at least a stratified and a homogeneous mode of operation, by means of adjustment of the air/fuel mixture which is supplied to the engine (1) and the time sequence of the injection of said mixture,
**characterized in that** said switch of mode of operation is initiated in connection with operation of the engine (1) when its air/fuel mixture, having a lambda value (λ_{S};λ_{H}), which corresponds to a required fuel amount (M_{s;}Mₕ) and a prevailing amount of inflowing air to the engine (1), reaches a predetermined limit value (λ₁) which is selected in order to correspond to a stable combustion in the engine (1) essentially without any torque changes during said switch.

2. Method according to claim 1,
**characterized in that** a switch between nominal and air-based fuel control to the engine (1) is Initiated when said lambda value (λ_{H}) reaches a second predetermined limit value (λ₂).

3. Method according to claim 2,
**characterized in that** said limit value (λ₂) is selected so that essentially no addition of torque in the engine (1) is provided during the switch of fuel control.

4. Method according to any of claims 2 or 3,
**characterized in that** said two limit values (λ₁, λ₂) are separated from each other.

5. Method according to any of the preceding claims,
**characterized in that** said switch is initiated at a driver-generated change of required torque from the engine (1).

6. Method according to any of the preceding claims, wherein said engine (1) is arranged in connection with a NOₓ adsorbing exhaust catalyst (18), which exhaust catalyst (18) is arranged in an exhaust system (16, 17) which is connected to said engine (1),
**characterized in that** said switch is initiated compulsory when a NOₓ regeneration of said exhaust catalyst (18) is necessary.

7. Arrangement for control of a combustion engine (1) of the DI engine type, which arrangement comprises means (5) for generation of an air/fuel mixture to the respective cylinders (3) of the engine (1), which are constituted by at least a stratified and a homogeneous mods of operation, and for switch between at least a first mode of operation and a second mode of operation of the engine (1) by means of adjustment of the air/fuel mixture which is supplied to the engine (1) and the time sequence of the injection of said mixture,
**characterized in that** said means (5) are adapted so that said switch of mode of operation is initiated in connection with operation of the engine (1) when its air/fuel mixture, having a lambda value (λ_{S}: λ_{H}), which corresponds to a required fuel amount (Mₛ; Mₕ) and a prevailing amount of inflowing air to the engine (1), reaches a predetermined limit value (λ₁) which is selected in order to correspond to a stable combustion in the engine (1) essentially without any torque changes during said switch.

## Patentansprüche

1. Verfahren zum Regeln einer Brennkraftmaschine (1) des Typs mit Direkteinspritzung, wobei zu dem Verfahren gehören:
Erzeugung einer Luft/Kraftstoffmischung zu den entsprechenden Zylindern (3) der Maschine (1), und
Schaltung zwischen wenigstens einer ersten Betriebsart und einer zweiten Betriebsart der Maschine (1), welche durch wenigstens eine Schichtbetriebsart und eine homogene Betriebsart gebildet sind, mittels Einstellung des Luft/Kraftstoffgemischs, das der Maschine (1) zugeführt wird, und der Zeitabfolge der Einspritzung des Gemischs,
**dadurch gekennzeichnet, dass** die Schaltung der Betriebsart in Zusammenhang mit dem Betrieb der Maschine (1) initiiert wird, wenn deren Luft/Kraftstoffgemisch, das einen Lambdawert (λ_{S}; λ_{H}) besitzt, der einer erforderlichen Kraftstoffmenge (Mₛ; Mₕ) und einer vorherrschenden Menge an einströmender Luft zu der Maschine (1) entspricht, einen vorbestimmten Grenzwert (λ₁) erreicht, der ausgewählt wird, um einer stabilen Verbrennung in der Maschine (1) im Wesentlichen ohne irgendwelche Drehmomentänderungen während der Schaltung zu entsprechen.

2. Verfahren nach .Anspruch 1,
**dadurch gekennzeichnet, dass** eine Schaltung zwischen einer nominellen und einer luftbasierten Kraftstoffregelung zu der Maschine (1) initiiert wird, wenn der Lambdawert (λ_{H}) einen zweiten vorbestimmten Grenzwert (λ₂) erreicht.

3. Verfahren nach Anspruch 2,
**dadurch gekennzeichnet, dass** der Grenzwert (λ₂) so ausgebildet wird, dass während der Schaltung der Kraftstoffregelung im Wesentlichen keine Drehmomenterhöhung in der Maschine (1) vorgesehen wird.

4. Verfahren nach einem der Ansprüche 2 oder 3,
**dadurch gekennzeichnet, dass** die beiden Grenzwerte (λ₁, λ₂) voneinander getrennt sind.

5. Verfahren nach einem der vorangehenden Ansprüche,
**dadurch gekennzeichnet, dass** die Schaltung bei einer fahrerseitig erzeugten Änderung des benötigten Drehmoments von der Maschine (1) initiiert wird.

6. Verfahren nach einem der vorangehenden Ansprüche, bei dem die Maschine (1) in Verbindung mit einem Stickstoff adsorbierenden Abgaskatalysator (18) angeordnet wird, wobei der Abgaskatalysator (18) in einem Abgassystem (16, 17) angeordnet wird, welches mit der Maschine (1) verbunden ist,
**dadurch gekennzeichnet, dass** die Schaltung zwangsläufig initiiert wird, wenn eine Stickoxydregenerierung des Abgaskatalysators (18) erforderlich ist.

7. Anordnung zum Regeln einer Brennkraftmaschine (1) des Typs mit Direkteinspritzung, wobei die Anordnung von Einrichtungen (5) zur Erzeugung eines Luft/Kraftstoffsgemischs für die entsprechenden Zylinder (3) der Maschine (1) aufweist, welche durch wenigstens eine Schichtbetriebsart und eine homogene Betriebsart gebildet sind, und zum Schalten zwischen wenigstens einer ersten Betriebsart und einer zweiten Betriebsart der Maschine (1) mittels Einstellung des Luft/Kraftstoffsgemischs, das der Maschine (1) zugeführt wird, und der Zeitabfolge der Einspritzung des Gemischs,
**dadurch gekennzeichnet, dass** durch die Einrichtung (5) die Schaltung der Betriebsart im Zusammenhang mit dem Betrieb der Maschine (1) initiierbar ist, wenn deren Luft/Kraftstoffgemisch, das einen Lambdawert (λ_{S}; λ_{H}) besitzt, der einer erforderlichen Kraftstoffmenge (Mₛ; Mₕ) und einer vorherrschenden Menge an einströmender Luft zu der Maschine (1) entspricht, einen vorbestimmten Grenzwert (λ₁) erreicht, der ausgewählt wird, um einer stabilen Verbrennung in der Maschine (1) im Wesentlichen ohne irgendwelche Drehmomentänderungen während der Schaltung zu entsprechen.

## Revendications

1. Procédé de commande d'un moteur à combustion (1) du type moteur DI, lequel procédé comporte les étapes consistant à :
produire un mélange air/carburant jusqu'aux cylindres respectifs (3) du moteur (1), et
basculer entre au moins un premier mode de fonctionnement et un second mode de fonctionnement du moteur (1), qui sont constitués par au moins un mode de fonctionnement stratifié et un mode de fonctionnement homogène, par le biais d'un ajustement du mélange air/carburant qui est délivré au moteur (1) et de la séquence de temps de l'injection dudit mélange,
**caractérisé en ce que** ledit basculement du mode de fonctionnement est déclenché en liaison avec un fonctionnement du moteur (1) lorsque son mélange air /carburant, ayant une valeur lambda (λ_{S} ; λ_{H}) qui correspond à une quantité de carburant requise (Mₛ ; Mₕ) et à une quantité dominante d'air entrant jusqu'au moteur (1), atteint une valeur limite prédéterminée (λ₁) qui est sélectionnée afin de correspondre à une combustion stable dans le moteur (1) sensiblement sans aucun changement de couple pendant ledit basculement.

2. Procédé selon la revendication 1, **caractérisé en ce qu'**un basculement entre une commande de carburant nominale et une commande de carburant basée sur l'air du moteur (1) est déclenchée lorsque ladite valeur lambda (λ_{H}) atteint une seconde valeur limite prédéterminée (λ₂).

3. Procédé selon la revendication 2, **caractérisé en ce que** ladite valeur limite (λ₂) est sélectionnée de sorte que pratiquement aucun ajout de couple dans le moteur (1) n est réalisé pendant le basculement de la commande de carburant.

4. Procédé selon l'une quelconque des revendications 2 ou 3, **caractérisé en ce que** lesdites deux valeurs limites (λ₁, λ₂) sont distinctes l'une de l'autre.

5. Procédé selon l'une quelconque des revendications précédentes, **caractérisé en ce que** ledit basculement est déclenché à un changement de couple requis à partir du moteur (1), généré par le conducteur.

6. Procédé selon l'une quelconque des revendications précédentes, dans lequel ledit moteur (1) est agencé en liaison avec un catalyseur d'échappement adsorbant les NOₓ (18), lequel catalyseur d'échappement (18) est agencé dans un système d'échappement (16, 17) qui est relié audit moteur (1),
**caractérisé en ce que** ledit basculement est déclenché obligatoirement lorsqu'une régénération de NOₓ dudit catalyseur d'échappement (18) est nécessaire.

7. Agencement de commande d'un moteur à combustion (1) du type moteur DI, lequel agencement comporte des moyens (5) pour produire un mélange air/carburant jusqu'aux cylindres respectifs (3) du moteur (1), qui sont constitués par au moins un mode de fonctionnement stratifié et un mode de fonctionnement homogène, et pour basculer entre au moins un premier mode de fonctionnement et un second mode de fonctionnement du moteur (1) par le biais d'un ajustement du mélange air/carburant qui est délivré au moteur (1) et de la séquence de temps de l'injection dudit mélange,
**caractérisé en ce que** lesdits moyens (5) sont adaptés de sorte que ledit basculement de mode de fonctionnement est déclenché en liaison avec un fonctionnement du moteur (1) lorsque son mélange air/carburant, ayant une valeur lambda (λ_{S} ; λ_{H}), qui correspond à une quantité de carburant requise (Mₛ ; Mₕ) et à une quantité dominante d'air entrant jusqu'au moteur (1), atteint une valeur limite prédéterminée (λ₁) qui est sélectionnée afin de correspondre à une combustion stable dans le moteur (1) sensiblement sans aucun changement de couple pendant ledit basculement.
